# EUROPÄISCHE PATENTSCHRIFT

(11) **EP 2 128 489 B1**
(45) Veröffentlichungstag und Bekanntmachung des Hinweises auf die Patenterteilung: **31.08.2011**
(21) Anmeldenummer: 09006897.4
(22) Anmeldetag: 22.05.2009
(51) Int. Cl.: F16H 7/12

(54) **Riemenspannvorrichtung für Starter-Generator-Anwendung**
Belt tensioning device for starter-generator application
Dispositif de serrage de bride pour application de générateur/démarreur

(30) Priorität: 28.05.2008 DE 102008025552
(43) Veröffentlichungstag der Anmeldung: 02.12.2009
(73) Patentinhaber: Muhr und Bender KG, 57439 Attendorn (DE)
(72) Erfinder: Jud, Joachim, 57567 Daaden (DE); Jung, Manfred, 56457 Westerburg (DE)
(74) Vertreter: Neumann, Ernst Dieter

(56) Entgegenhaltungen:
- EP-A- 1 420 192
- WO-A-2004/059192
- DE-A1-102005 039 719

## Beschreibung

Die Erfindung betrifft eine Riemenspannvorrichtung für einen Riementrieb, der eine Antriebsmaschine mit einer Antriebsriemenscheibe, die um eine Antriebsachse antreibbar ist, und mehrere weitere Riemenscheiben aufweist, und mit einem endlosen Riemen, der die Antriebsriemenscheibe und die weiteren Riemenscheiben umschlingt, wobei die Riemenspannvorrichtung ein Gehäuse aufweist, in dem zwei Spannarme um eine gemeinsame Schwenkachse schwenkbar gelagert sind, in denen jeweils Spannrollen mit zur Antriebsachse parallelen Drehachsen gelagert sind, wobei die Riemenspannarme mit Federmitteln gegeneinander abgestützt sind. Ungeachtet der vorstehend verwendeten Begriffe soll die Spannvorrichtung für Zugmitteltriebe im allgemeinen verwendbar sein.

Bei neuzeitlichen Brennkraftmaschinen, bei denen ein Starter-Generator zum Einsatz kommt, wechselt je nach Betriebsstatus beim Starten mit Drehmomentabgabe an der Antriebsriemenscheibe bzw. im Fahrbetrieb bei Drehmomentaufnahme an der Antriebsriemenscheibe die Position von Zugtrum und Lostrum, die somit einmal in Umlaufrichtung des Riemens vor der Antriebsriemenscheibe und einmal in Umlaufrichtung des Riemens hinter der Antriebsriemenscheibe zu finden sind. Hierbei ist in jedem Fall der Lostrum mit einer Spannrolle zu beaufschlagen, so daß die Verwendung von zwei Spannrollen, insbesondere jeweils unmittelbar vor und unmittelbar hinter der Antriebsriemenscheibe zwingend ist. Dem Wechsel von Drehmomentabgabe zu Drehmomentaufnahme an der Antriebsriemenscheibe entspricht der Wechsel von Drehmomentaufnahme zu Drehmomentsabgabe an der Kurbelwellenriemscheibe der Brennkraftmaschine.

Aus der gattungsgemäßen EP 1 420 192 A2 ist eine Spannvorrichtung für einen Hülltrieb eines Aggregats bekannt, die ein am Außenumfang des Generatorgehäuses angeordnetes Tragteil mit einer zur Generator-Welle parallel gerichteten Lagerbuchse umfasst. Die Lagerbuchse dient zur Lagerung einer Torsionsfedereinrichtung, die zwei Spannarme trägt, an deren Enden jeweils eine Spannrolle drehbar befestigt ist. Die Lagerbuchse ist mit Abstand parallel zur Generator-Welle angeordnet und bildet die Drehachse der Spannarme.

Aus der W02004/059192 A1 ist ein Zweiarmspanner für einen Riemenantrieb bekannt. Der Riemenantrieb umfasst mehrere Riemenscheiben, die an dem Motorzapfen bzw. dem Generator bzw. einem Hilfsaggregats angebracht sind. Der Zweiarmriemenspanner hat ein festes Teil, mit dem er an dem Motorgehäuse angebracht ist, sowie zwei Arme mit jeweils einer Spannrolle, die um eine gemeinsame Schwenkachse A schwenkbar an dem festen Teil angebracht sind. Der Zweiarmriemenspanner ist zentral innerhalb des umlaufenden Riemens an dem Motorgehäuse angebracht.

Aus der DE 10 2005 039 719 A1 ist ein Spannsystem für einen Zugmitteltrieb mit einem in den Zugmittel integrierten Startergenerator bekannt. Das Spannsystem umfasst zwei Spanneinrichtungen, die jeweils einen tragenden Hebel aufweisen, an deren Enden jeweils eine Spannrolle drehbar befestigt ist. Die Hebel sind über entsprechende Drehachsen mittels Gleitlager seitlich benachbart zum Gehäuse des Starter-generators schwenkbar gelagert.

Aus der EP 1 464 871 A1 ist ein Doppelriemenspanner bekannt, bei dem die Schwenkachse der Spannarme außerhalb des durch die verschiedenen Drehachsen der Riemenscheiben aufgespannten Polygons liegt. Dies hat verschiede Nachteile. Riemenspanner dieser Art benötigen erheblichen Bauraum, der nicht immer zur Verfügung steht. Das Auflegen des Riemens ist sehr schwierig. Aufgrund der langen Spannarme sind lange Hebelarme vorgegeben, die hohe Federkräfte erfordern. Hierbei ist außerdem die Hebelwirkung sehr ungünstig, da die Richtung der Spannarmbewegung und die resultierende Kraftrichtung des Riemens in der Regel stark voneinander abweichen.

Aus der DE 199 26 615 A1 ist eine Spanneinrichtung für Zugmittel mit zwei Spannrollen bekannt, bei denen die Schwingachsen der Spannarme der beiden Spannrollen jeweils mit der Antriebsachse der Antriebsriemenscheibe zusammenfallen. Die Spanneinrichtung verfügt über ein Flanschgehäuse, in welchem eine Lagerwelle für eine Antriebsriemenscheibe gelagert ist. Die Vorrichtung kann fertig montiert an einer Antriebsmaschine angeordnet werden, wobei die Lagerwelle mit der Antriebswelle der Antriebsmaschine mittels einer Steckverbindung gefügt wird. Nachteilig ist hierbei die insgesamt zweiteilige Antriebswelle sowie die zusätzliche Lagerung der Lagerwelle der Antriebsriemenscheibe im Flanschgehäuse, durch die die Baulänge wesentlich verlängert wird.

Hiervon ausgehend liegt der Erfindung die Aufgabe zugrunde, eine Riemenspannvorrichtung der letztgenannten Art bereitzustellen, die einfach aufgebaut ist und bei kurzer Baulänge unkompliziert montierbar und demontierbar ist.

Die Lösung hierfür besteht in einer Riemenspannvorrichtung für einen Riementrieb, der eine Antriebsmaschine mit einer Antriebsriemenscheibe, die von einer Antriebswelle um eine Antriebsachse antreibbar ist, und mehrere weitere Riemenscheiben aufweist, und mit einem endlosen Riemen, der die Antriebsriemenscheibe und die weiteren Riemenscheiben umschlingt, wobei die Riemenspannvorrichtung ein Gehäuse aufweist, in dem zwei Spannarme um eine gemeinsame Schwenkachse schwenkbar gelagert sind, in denen jeweils Spannrollen mit zur Antriebsachse parallelen Drehachsen gelagert sind, wobei die Spannarme mit Federmitteln gegeneinander abgestützt sind, wobei das Gehäuse bei an der Antriebsmaschine montierter Antriebsriemenscheibe dadurch montierbar ist, daß das Gehäuse in einem die Antriebsriemenscheibe umgebenden Ringbereich berührungsfrei gegenüber der Antriebsmaschine ist, und wobei die Schwenkachse der Spannarme innerhalb des Durchmessers der Antriebsriemenscheibe angeordnet ist.

Hierbei wird eine günstige Geometrie der Lagerung der Spannarme gewählt, ohne Komplikationen hinsichtlich der Anordnung der Antriebsriemenscheibe und deren Lagerung in Kauf zu nehmen. Insbesondere kann die Antriebsriemenscheibe unverändert eng an der Antriebsmaschine, insbesondere dem Starter-Generator angeordnet sein. Die Montage und Demontage der Riemenspannvorrichtung kann in günstiger Weise völlig unabhängig von der Montage der übrigen Teile des Riementriebes erfolgen. Die unmittelbare Anordnung der erfindungsgemäßen Riemenspannvorrichtung kann an einem Maschinengestell, d. h. insbesondere an der Brennkraftmaschine erfolgen, die auch die Antriebsmaschine, d. h. Starter-Generator und die weiteren Riemenscheiben trägt, wobei die Anordnung die Verwendung von einem Aggregateträger zwischen Riemenspannvorrichtung und Brennkraftmaschine einschließen soll. Nach einer anderen Möglichkeit, nach der ebenfalls die grundsätzliche Konstruktion von Antriebsmaschine, d. h. von Starter-Generator und Antriebsriemenscheibe unbeeinflußt bleibt, kann die Riemenspannvorrichtung an der Antriebsmaschine, also dem Starter-Generator befestigt werden.

Nach der erstgenannten Ausführung ist insbesondere ein Befestigungsarm vorgesehen, der am Gehäuseumfang außen anschließt und im wesentlichen in der Ebene des Gehäuses liegt. Nach der zweiten Ausgestaltung kann vorgesehen sein, daß eine Flanscherweiterung am Gehäuse vorgesehen ist, die Anschraubmittel für die Anschraubung an der Antriebsmaschine aufweist, wobei diese außerhalb des Durchmessers der Antriebsriemenscheibe liegen. Die Flanscherweiterung kann in der Ebene des Gehäuses oder zu dieser versetzt vom ringförmigen Gehäuse nach außen weisen. Die genannten Befestigungsmittel müssen in einem Umfangsbereich liegen, der den Spannarmen und dem von der Antriebsriemenscheibe wegführenden Antriebsriemen im wesentlichen gegenüberliegen. Vorzugsweise erstrecken sich die Befestigungsmittel am Gehäuse in axialer Ansicht auf die Antriebsriemenscheibe über einen Teilkreis von 30° bis 270°, insbesondere von 45° bis 180°.

Nach einer bevorzugten Ausgestaltung ist die Schwenkachse der Spannarme innerhalb des größten Durchmessers der Antriebsriemenscheibe, insbesondere koaxial zur Antriebsachse der Antriebsriemenscheibe, angeordnet. Auf diese Weise wird eine kompakte Anordnung erreicht, wobei eine gute axiale Montierbarkeit des Gehäuses samt Spannarmen, bei bereits an der Antriebsmaschine montierter Antriebsriemenscheibe, ermöglicht wird. Die Befestigungsmittel zur Befestigung des Gehäuses an der Antriebsmaschine oder einem anderen stehenden Bauteil liegen vorzugsweise, in axialer Ansicht auf die Antriebsriemenscheibe, außerhalb des größten Durchmessers der Antriebsriemenscheibe. Dies unterstützt eine einfache Montierbarkeit bzw. Demontierbarkeit des Gehäuses bei an der Antriebsmaschine montierter Antriebsriemenscheibe.

Nachfolgend werden drei verschiedene Arten der konstruktiven Durchbildung der erfindungsgemäßen Riemenspanneranordnung beschrieben.

Bei der ersten Ausführung ist insbesondere vorgesehen, daß das Gehäuse aus zwei Platten zusammengesetzt ist, zwischen denen die beiden Spannarme gehalten sind. Weiterhin ist vorgesehen, daß das Gehäuse zwei axial beanstandete Lagerringe ausbildet, in denen die Spannarme jeweils doppelt gelagert sind, wobei die Spannarme jeweils zwei ringförmige Lagergegenringe ausbilden, die in den Lagerringen des Gehäuses gelagert sind. Hierbei kann vorgesehen sein, daß ein erster Spannarm unmittelbar im Gehäuse und ein zweiter Spannarm im ersten Spannarm gelagert ist, wobei Gleitbuchsen aus Lagerwerkstoff jeweils zwischengeschaltet sein können. Hierbei können die Spannrollen vorzugsweise jeweils zwischen zwei Wangen der jeweiligen Spannarme gehalten sein.

Bei der zweiten Ausführung ist vorgesehen, daß das Gehäuse die Form einer Platte mit einer Kreisöffnung hat, die einem Lagerring bildet und von den Gegenlagerringen in beiden Spannarmen von innen umfaßt wird. Auch hierbei ist es möglich, daß ein erster Spannarm unmittelbar im Gehäuse und ein zweiter Spannarm im ersten Spannarm gelagert ist, wobei ebenfalls Gleitbuchsen aus Lagerwerkstoff zwischengeschaltet sein können. Hierbei ist vorzugsweise vorgesehen, daß die Spannrollen jeweils fliegend in einer Wange der Spannarme gelagert sind.

Nach einer dritten Ausführung ist vorgesehen, daß das Gehäuse die Form einer Hülse hat, die einen Lagering bildet, auf der die beiden Spannarme mit entsprechenden Gegenlagerringen gelagert sind. Auch hierbei kann wiederum vorgesehen sein, daß ein erster Spannarm unmittelbar auf dem Gehäuse und ein zweiter Spannarm auf dem ersten Spannarm gelagert ist, wobei Gleitbuchsen aus Lagerwerkstoff zwischengeschaltet sein können. Auch hierbei kann vorgesehen sein, daß die Spannrollen jeweils fliegend einseitig an den Spannarmen angeordnet sind.

Die Erfindung schließt einen Riementrieb ein, der eine Antriebsmaschine mit einer Antriebsriemenscheibe, die um eine Antriebsachse antreibbar ist, und mehrere weitere Riemenscheiben aufweist, und mit einem endlosen Riemen, der die Antriebsriemenscheibe und die weiteren Riemenscheiben umschlingt, wobei die Riemenspannvorrichtung ein Gehäuse aufweist, in dem zwei Spannarme um eine gemeinsame Schwenkachse schwenkbar gelagert sind, in denen jeweils Spannrollen mit zur Antriebsachse parallelen Drehachsen gelagert sind, wobei die Spannarme mit Federmitteln gegeneinander abgestützt sind, mit einer Riemenspannvorrichtung mit einem oder mehreren der vorstehend genannten Merkmale.

Die unmittelbar zwischen den Spannarmen wirksame Spannfeder ist bevorzugt als Druckfeder ausgebildet. Die Verwendung von Zugfedern, Haarnadelfedern, Torsionsfedern oder anderen Federformen ist nicht ausgeschlossen. Besonders bevorzugt ist eine über einen Winkelbereich von weniger als 360° reichende gebogene Flachfeder oder Bandfeder.

Die Spannrollen können mit den erfindungsgemäßen Mitteln mit einem geringsmöglichen Abstand zur Antriebsriemenscheibe angeordnet werden. Hiermit wird größtmöglicher Bauraum für die unterzubringenden weiteren Nebenaggregate freigehalten, die vom Riementrieb angetrieben werden.

Bevorzugte Ausführungsbeispiele der Erfindung sind in den Zeichnungen dargestellt und werden nachstehend beschrieben.
- Figur 1: zeigt ein Prinzipbild eines erfindungsgemäßen Riementriebs in 3D- Darstellung ohne Befestigungsmittel;
- Figur 2: zeigt einen erfindungsgemäßen Riementrieb in einer ersten Ausführung in 3D-Darstellung;
- Figur 3: zeigt die Riemenspannvorrichtung des Riementriebs nach Figur 2 in ge- schnittener 3D-Darstellung;
- Figur 4: zeigt die Riemenspannvorrichtung nach Figur 3 in einem abgewinkelten Schnitt durch die Achse der Antriebsriemenscheibe und die Achsen der Spannrollen;
- Figur 5: zeigt eine Riemenspannvorrichtung in einer zweiten Ausführung in geschnit- tener 3D-Darstellung.
- Figur 6: zeigt die Riemenspannvorrichtung nach Figur 5 in einem abgewinkelten Schnitt durch die Achse der Antriebsriemenscheibe und die Achsen der Spannrollen;
- Figur 7: zeigt die Riemenspannvorrichtung nach Figur 5 in einem abgewinkelten Schnitt durch die Achse der Antriebsriemenscheibe, die Achse einer Spannrolle und die Achse einer Befestigungsschraube;
- Figur 8: zeigt eine Riemenspannvorrichtung in einer dritten Ausführung in axialer Ansicht;
- Figur 9: zeigt die Riemenspannvorrichtung nach Figur 8 in einem abgewinkelten Schnitt durch die Achse der Antriebsriemenscheibe und die Achsen der Spannrollen;
- Figur 10: zeigt die Riemenspannvorrichtung nach Figur 8 in einem abgewinkelten Schnitt durch die Achse der Antriebsriemenscheibe, die Achse einer Spannrolle und die Achse einer Befestigungsschraube.

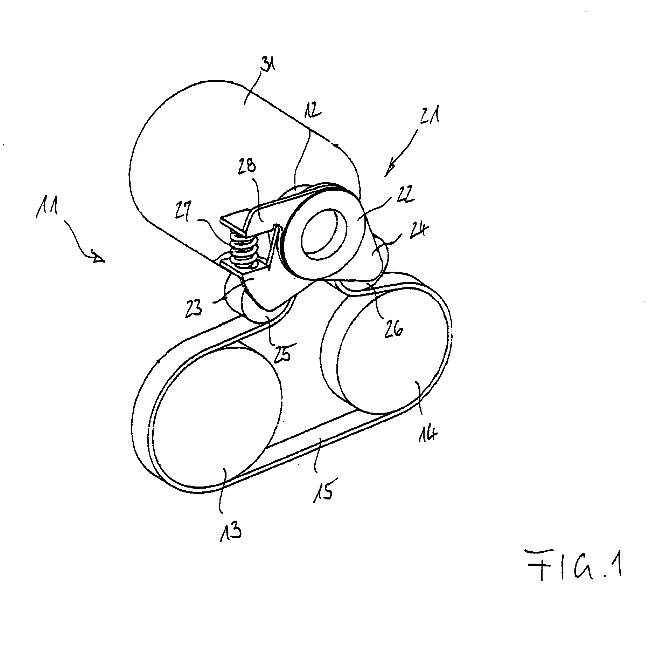

In Figur 1 ist das Prinzipbild eines Riementriebes 11 dargestellt, der eine Antriebsriemenscheibe 12, die alternativ Drehmoment abgeben oder Drehmoment aufnehmen kann, und zwei weitere Riemenscheiben 13, 14 umfaßt, von denen eine dementsprechend alternativ Drehmoment aufnehmen oder Drehmoment abgeben kann. Die Riemenscheiben 12, 13, 14 werden von einem Zugmittel in Form eines endlosen Riemens 15 umschlungen, der als Keilrippenriemen (Poly-V-Riemen) oder Keilriemen ausgeführt sein kann, wobei das Zugmittel aber auch als Zahnriemen oder Flachriemen oder Gliederband oder Kette ausgebildet sein kann. Auf den Riemen 15 wirken beidseitig von der Antriebsriemenscheibe 12 jeweils Spannrollen 25, 26 ein, die in Spannarmen 23, 24 gelagert sind, die Bestandteil einer Riemenspannvorrichtung 21 sind.

Die Riemenspannvorrichtung 21 hat ein Gehäuse 22, in dem die zwei Spannarme 23, 24 mit den Spannrollen 25, 26 gehalten sind. Dabei sind sie Spannarme 23, 24 um eine gemeinsame Schwenkachse relativ zueinander schwenkbar, wobei die Schwenkachse innerhalb des Durchmessers der Antriebsriemenscheibe, vorzugsweise etwa koaxial zur Antriebsachse der Antriebsriemenscheibe 12 liegt. Der Spannarm 24 hat einen Gegenarm 28, eine Spannfeder 27 ist als Schraubendruckfeder ausgebildet, die zwischen dem Spannarm 23 und dem Gegenarm 28 des Spannarms 24 eingesetzt ist. Hierdurch wirken die Spannrollen 25, 26 mit Spannfunktion von außen auf die Rückseite des Riemens ein. Das Gehäuse 22 befindet sich vor der Ebene des Riemens 15 sowie der Riemenscheiben 13, 14, insbesondere auch vor der Antriebsriemenscheibe 12. Die Antriebsriemenscheibe 12 kann in dieser Darstellung eine Riemenscheibe auf der Antriebswelle einer Antriebsmaschine, insbesondere eines Starter-Generators 31 sein und eine der Riemenscheiben 13 oder 14 kann dementsprechend die Riemenscheibe auf der Kurbelwelle einer Brennkraftmaschine sein. Einzelheiten zur Befestigung des Gehäuses 22 an der Antriebsmaschine 31 sind in dieser Darstellung nicht gezeigt. Das Gehäuse 22 ist aber berührungsfrei gegenüber der Antriebsscheibe 12, deren drehenden Antriebsmitteln sowie einem den Austritt der drehenden Antriebsmittel aus der Antriebsmaschine 31 umgebenden Ringbereich der Antriebsmaschine gehalten. Unter dem Einfluß der vorgespannt eingebauten Spannfeder 27 drücken die Spannarme 23, 24 die Spannrollen 25, 26 von außen gegen den Riemen 15, so daß unabhängig von dem Betriebszustand, d. h. sowohl bei Drehmomentaufnahme als auch bei Drehmomentabgabe der Antriebsriemenscheibe 12 im jeweiligen Lostrum zwischen Antriebsriemenscheibe 12 und weiterer Riemenscheibe 13 bzw. Antriebsriemenscheibe 12 und weiterer Riemenscheibe 14 keine Lose entsteht, sondern Zugspannung aufgebaut wird.

Die gesamte Riemenspannvorrichtung 21 ist berührungslos gegenüber der Antriebsriemenscheibe 12 ausgebildet und angeordnet, ebenso wie gegenüber allen mit der Antriebsriemenscheibe 12 verbundenen drehenden Teilen, insbesondere gegenüber der Antriebswelle des Starter-Generators 31 und auch gegenüber deren stehenden Lagerungsmitteln am Starter-Generator. Die Befestigungsmittel für das Gehäuse 22 sind vorzugsweise außerhalb des Riemenverlaufes am Starter-Generator 31 oder an einem anderen Maschinenteil angeschlagen.

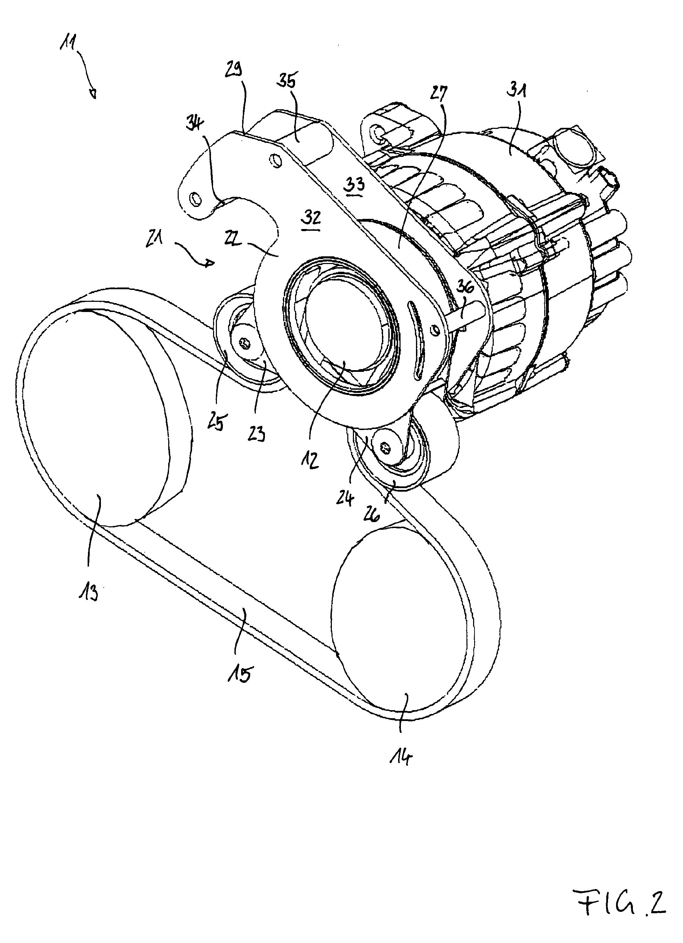

In Figur 2 ist ein erfindungsgemäßer Riementrieb 11 mit einer erfindungsgemäßen Spannvorrichtung 21 mit Details der Befestigungsmittel gezeigt. Die Antriebsriemenscheibe 12 ist wiederum an einem Starter-Generator 31 angebracht. Das Gehäuse 22 der Riemenspannvorrichtung 21 weist in der hier gezeigten Ausführung einen Befestigungsarm 29 zur von der Befestigung des Starter-Generators 31 unabhängigen Anbringung am gleichen Maschinengestell wie der Starter-Generator 31 auf, sei es unmittelbar oder mittels eines Geräteträgers. Die Antriebsriemenscheibe 12 liegt in dieser Ausführung innerhalb des Gehäuses 22. Das Gehäuse 22 umgreift den Verlauf des Riemens 15, der zwischen den Spannrollen 23, 24 am Umfang aus dem Gehäuse 22 austritt. Das Gehäuse 22 umfaßt zwei normal zur Antriebsachse liegende Platten 32, 33, die über Schrauben und Distanzstücke 34, 35, 36 miteinander verbunden sind. Die Platten 32, 33 haben zentrale Durchbrüche, so daß das Gehäuse 22 zusammen mit dem Riemen 15 bei montierter Antriebsriemenscheibe 12 in die dargestellte Lage gebracht und in dieser befestigt werden kann. Zwischen den Platten 32, 33 ist eine als flache Bügelfeder ausgebildete Spannfeder 27 zu erkennen, die sich an den beiden Spannarmen 23, 24 abstützt. Weiter ist zwischen den beiden Platten 32, 33 zumindest in einem Umfangsbereich zwischen den beiden Spannarmen 23, 24 eine radiale Öffnung zum Durchtritt des Riemens 15 gebildet.

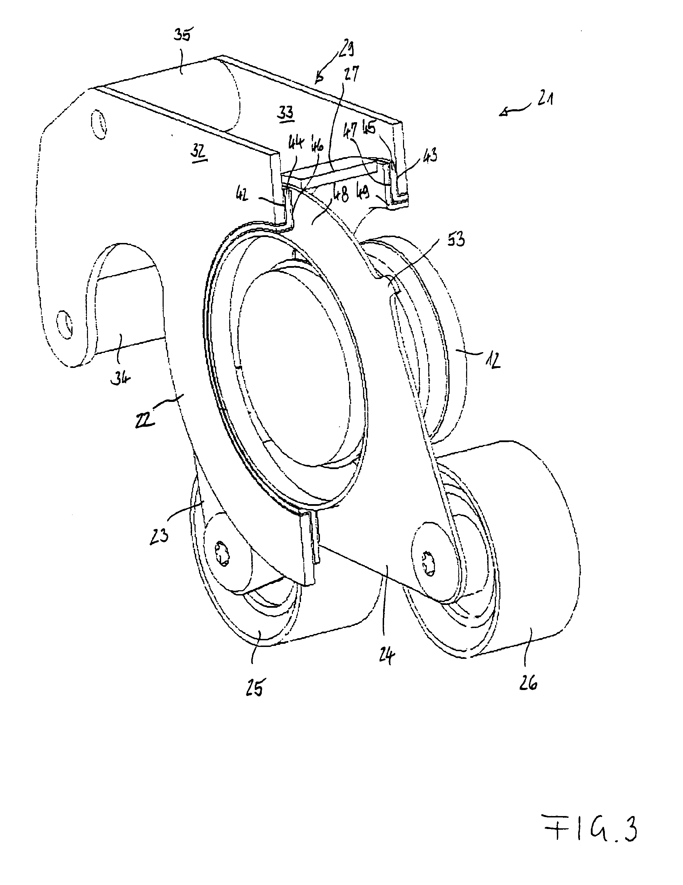

In Figur 3 sind gleiche Einzelheiten wie in Figur 2 mit gleichen Bezugsziffern bezeichnet. Auf die vorangehende Beschreibung wird Bezug genommen. In Figur 3 ist die Spannvorrichtung 21 nach Figur 2 als Baugruppe in ihrer Zuordnung zur Antriebsriemenscheibe 12 dargestellt, wobei Teile des Gehäuses 22 weggeschnitten sind. Es ist die hier ohne Anbindung an den Starter-Generator dargestellte Antriebsscheibe 12 gezeigt, die vom Gehäuse 22 berührungsfrei umfasst wird. Vom Gehäuse 22 ist der Befestigungsarm 29 vollständig erkennbar. Im Bereich des Befestigungsarms 29 befinden sich die Distanzstücke 34, 35 zwischen den Platten 32, 33. In zwei Kreislöcher in den Platten 32, 33, die zwei axial beabstandete stehende Lagerringe bilden, ist ein erstes Paar von Bundbuchsen 42, 43 eingesetzt, in denen der erste Spannarm 23 unmittelbar gelagert ist. Der erste Spannarm 23 umfaßt zwei Wangen 44, 45 die jeweils mit Kreislöchern versehen sind, die von angeformten Bundansätzen eingefaßt werden. Im Bereich der Bundbuchsen 42, 43 ist der erste Spannarm mit den Bundansätzen in die Kreislöcher in den Platten 32, 33 eingesetzt. Die Wangen 44, 45 des ersten Spannarms 23 sind zumindest über den Lagerzapfen der Spannrolle 25 miteinander verbunden. In die Bundansätze der Wangen 44, 45 sind wiederum zweite Bundbuchsen 46, 47 eingesetzt, in denen der zweite Spannarm 24 unmittelbar gelagert ist. Der zweite Spannarm 24 umfaßt zwei Wangen 48, 49, die jeweils mit Kreislöchern versehen sind, die von angeformten Bundansätzen eingefaßt werden. Im Bereich der Bundbuchsen 46, 47 ist der zweite Spannarm 24 mit den Bundansätzen in die Kreislöcher in den Wangen 44, 45 des ersten Spannarms 23 eingesetzt. Die Wangen 48, 49 des zweiten Spannarms 24 sind zumindest über den Lagerzapfen der Spannrolle 26 miteinander verbunden. An der Wange 48 des Spannarms 24 ist eine Abstütznase 53 ausgebildet, an der sich die flache Bügelfeder 27 abstützen kann. Eine entsprechende Abstützmöglichkeit ist an der zweiten Wange 49 des Spannarms 24 anzunehmen. An den Abstütznasen stützt sich die Bügelfeder 27 im vorgespannten Zustand ab. Eine entsprechende doppelte Abstützmöglichkeit ist an den Wangen 44, 45 des ersten Spannarms 23 anzunehmen. Die Spannrollen 25, 26 sind gegen der Rückstellkraft der Bügelfeder 27 auseinanderzudrücken, wobei die Montage der Riemenspannvorrichtung im Riementrieb bei auseinandergedrückten Spannrollen erfolgt.

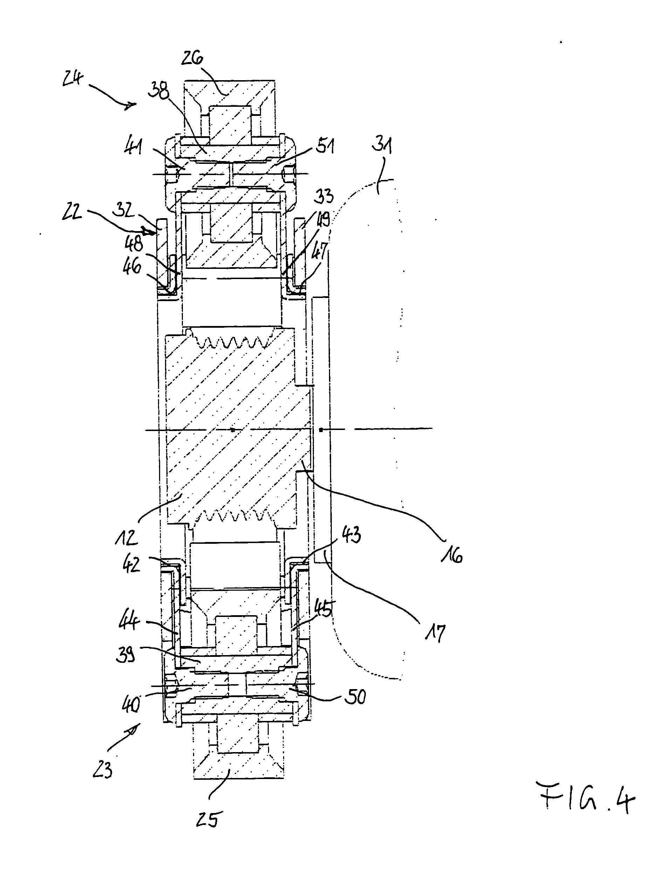

In Figur 4 sind gleiche Einzelheiten wie in den Figuren 2 und 3 mit gleichen Bezugsziffern bezeichnet. Wie in Figur 1 ist hier die Anordnung der Riemenspannvorrichtung 21 gegenüber dem Starter-Generator 31 und der Antriebsriemenscheibe 12 erkennbar. Das Gehäuse 22 ist berührungsfrei gegenüber der Antriebsriemenscheibe und den stehenden Lagerungsmitteln der Antriebswelle 16 im Starter-Generator 31. Zwischen den zwei Platten 32, 33 des Gehäuses 22 sind die Spannarme 23, 24 der beiden Spannrollen 25, 26 gelagert, und zwar der Spannarm 23 der Spannrolle 25 unmittelbar und der Spannarm 24 der Spannrolle 26 seinerseits in dem Spannarm 23 der Spannrolle 25. In die Spannarme 23, 24 sind Lagerzapfen 38, 39 eingesetzt, die mit Schrauben 40, 41, 50, 51 in den jeweiligen Spannarmen 23, 24 als stehende Achsen eingespannt sind. Auf diesen sind die Spannrollen 25, 26 drehbar gelagert. Es ist erkennbar, daß die Spannvorrichtung 21 insgesamt ohne Demontage der Antriebsscheibe 12 mittels ihrer Befestigungsanordnung am Starter-Generator montiert werden kann. Gleiches gilt für die Demontage der Spannvorrichtung bei am Starter-Generator montierter Antriebsriemenscheibe, die in gleicher Weise möglich ist.

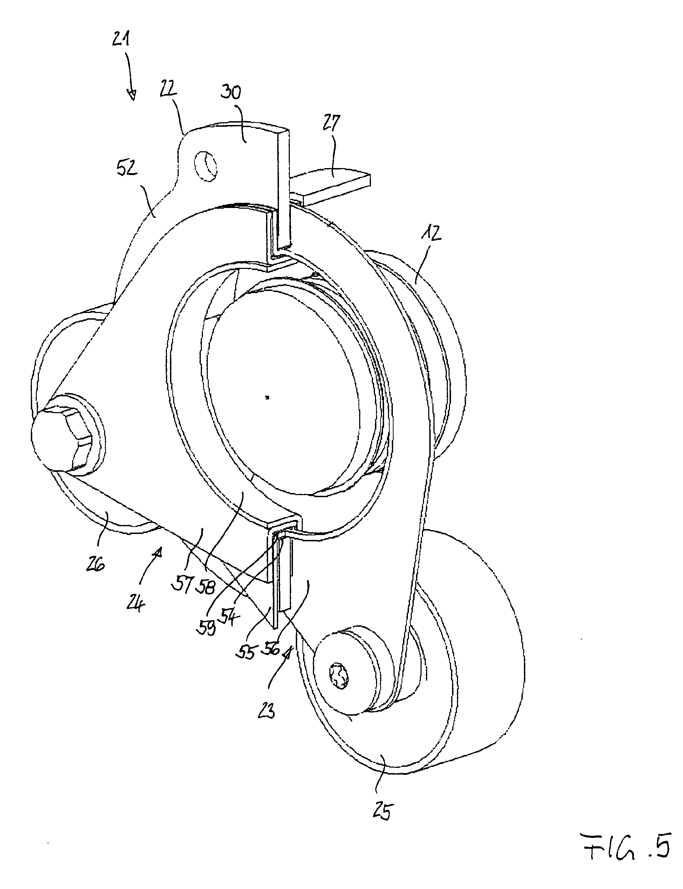

In Figur 5 ist eine erfindungsgemäße Riemenspannvorrichtung 21 in abgewandelter Ausführung dargestellt, die in weiten Teilen der Ausführungsformen gemäß den Figuren 1 bis 4 entspricht, auf deren Beschreibung hinsichtlich der Gemeinsamkeiten insofern Bezug genommen wird. Bei der vorliegenden Ausführung ist das Gehäuse 22 als ebene Platte 52 mit einem Kreisloch ausgeführt, die teilweise vor der Ebene der Antriebsriemenscheibe bei geringer Überdeckung angeorndet ist. Die Befestigungsmittel zu Befestigung des Gehäuses 22 sind in Form einer Flanscherweiterung 30 mit einem Befestigungsloch erkennbar. In das Kreisloch des Gehäuses 22 ist eine erste Gleitbuchse 54 eingesetzt, das von einem aus zwei Wangen 55, 56 zusammengesetzten ersten Spannarm 23 umfaßt wird, der eine Spannrolle 25 trägt. Die Wangen 55, 56 sind jeweils mit Kreislöchern versehen, die von angeformten Bundansätzen eingefaßt sind, die U-profilförmig aneinandergesetzt sind. In das Kreisloch des ersten Spannarms 23 ist eine zweite Gleitbuchse 59 eingesetzt, in die ein aus zwei Wangen 57, 58 zusammengesetzter zweiter Spannarm 24 eingesetzt ist, der eine Spannrolle 26 trägt. Die Wangen 57, 58 sind jeweils mit Kreislöchern versehen, die von angeformten Bundansätzen eingefaßt sind, die U-profilförmig ineinandergeschoben sind. Die Spannrollen 25, 26 sind jeweils fliegend an den Spannarmen 23, 24 angeordnet. Eine Spannfeder 27 in Form einer flachen Bandfeder ist auch hier zwischen den Spannarmen 23, 24 wirksam, ohne daß Einzelheiten zur Abstützung erkennbar sind. Bei einem Auseinanderdrücken der Spannrollen 25, 26 voneinander wird die Spannfeder 27 vorgespannt, wobei die Riemenspannvorrichtung mit auseinandergedrückten Spannrollen 25, 26 im vorgespannten Zustand im Riementrieb montiert wird.

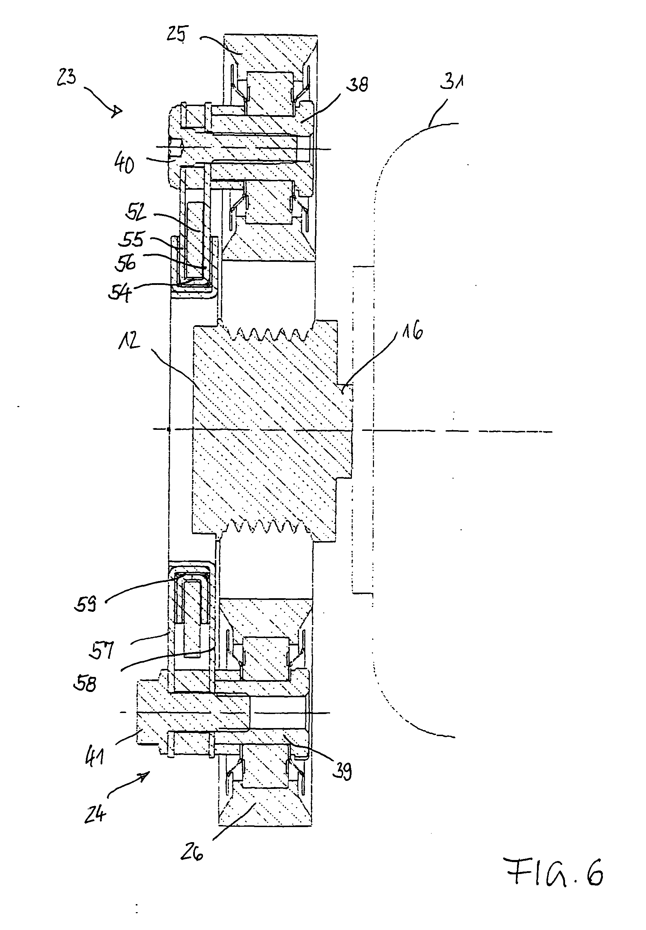

In Figur 6 sind gleiche Einzelheiten wie in Figur 5 mit gleichen Bezugsziffern bezeichnet. Wie in Figur 4 ist hier die Anordnung der Riemenspannvorrichtung 21 gegenüber dem Starter-Generator 31 und der Antriebsriemenscheibe 12 erkennbar. Das Gehäuse 22 ist berührungsfrei gegenüber der Antriebsriemenscheibe und den stehenden Lagerungsmitteln der Antriebswelle 16 im Starter-Generator 31. In dem plattenförmigen Gehäuse 22 sind die Spannarme 23, 24 der beiden Spannrollen 25, 26 gelagert, und zwar der Spannarm 23 der Spannrolle 25 unmittelbar und der Spannarm 24 der Spannrolle 26 seinerseits in dem Spannarm 23 der Spannrolle 25. An den Spannarme sind Lagerzapfen 38, 39 angeordnet, die mit Schrauben 40, 41 an den jeweiligen Spannarmen als stehende Achsen angeschraubt sind. Auf diesen sind die Spannrollen 25, 26 drehbar gelagert.

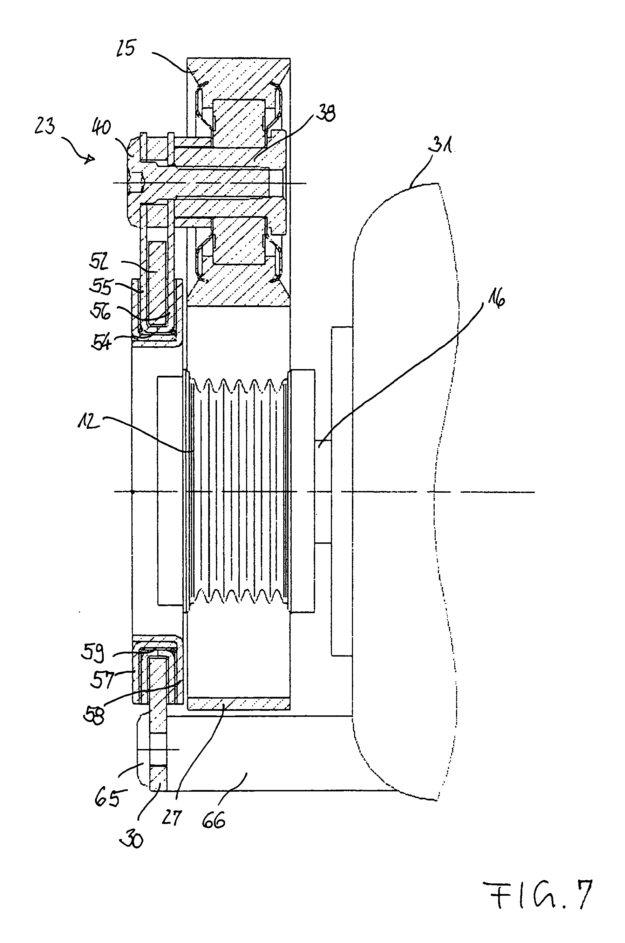

In Figur 7 sind gleiche Einzelheiten wie in den Figuren 5 und 6 mit gleichen Bezugsziffern versehen. Der dargestellte abgewinkelte Schnitt verläuft hierbei durch die Achse der Spannrolle 25 sowie durch einen von mindestens zwei, vorzugsweise drei, Befestigungszapfen 63 am Gehäuse des Starter-Generators 31, an dem das plattenförmige Gehäuse 22 im Bereich der Flanscherweiterung 30 angeschraubt ist. Zwischen dem Gehäuse 22 und dem Starter-Generator 31 ist ein die Antriebswelle 16 der Antriebsriemenscheibe 12 umgebender freier Ringraum ausgebildet, der innerhalb der Befestigungsmittel liegt. Es ist erkennbar, daß die Spannvorrichtung 21 insgesamt ohne Demontage der Antriebsscheibe 12 mittel ihrer Befestigungsmittel am Starter-Generator montiert werden kann. Gleiches gilt für die Demontage der Spannvorrichtung bei am Starter-Generator montierter Antriebsscheibe, die in gleicher Weise möglich ist.

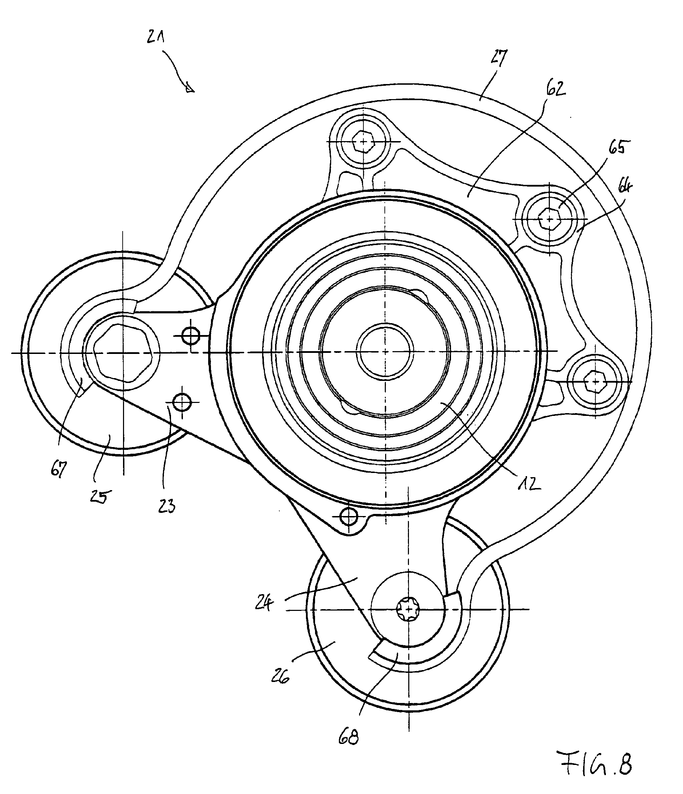

In Figur 8 ist ein erfindungsgemäßer Riementrieb 21 in einer weiteren Abwandlung in Axialansicht auf die Antriebriemenscheibe 12 dargestellt. Diese entspricht in weiten Teilen den obengenannten Ausführungsformen gemäß den Figuren 2 bis 7, auf deren Beschreibung hinsichtlich der Gemeinsamkeiten insofern Bezug genommen wird. Es ist bei der vorliegenden Ausführungsform ein an einem zentralen buchsenförmigen Gehäuse 22 angeformter Halteflansch 62 erkennbar, der an mehrere Gehäusezapfen an einer Antriebsmaschine anschraubbar ist. Der Flansch hat drei Flanschaugen 64, in die Befestigungsschrauben 65 eingedreht sind. Die hierdurch gebildeten Befestigungsmittel erstrecken sich über einen Kreisabschnitt von mehr als 30° und weniger als 270° um die Antriebsriemenscheibe 12. Für eine gute Anbindung sollte der Kreisabschnitt mindestens 45° und höchstens 180° betragen; die genannten Bereiche gelten auch für die anderen Ausführungsbeispiele. Die Spannfeder 27 ist als Bügelfeder ausgebildet, die auf die Spannarme 23, 24 aufgeclipst sind, wobei Teillagerschalen 67, 68 zwischen Köpfen der Spannarme 23, 24 und der Spannfeder 27 zu erkennen sind.

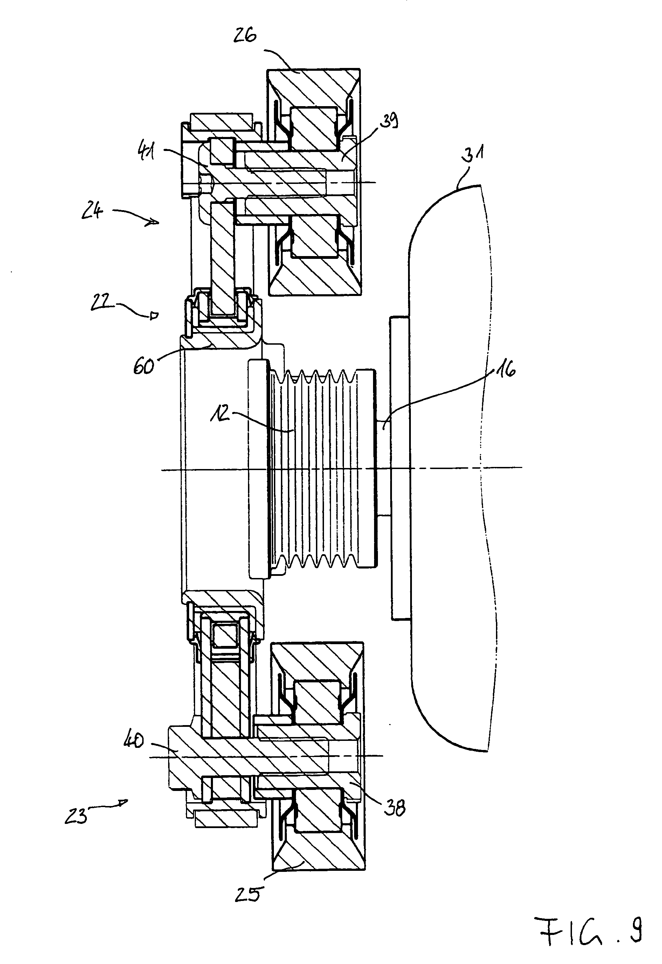

In Figur 9 sind gleiche Einzelheiten wie in Figur 8 mit gleichen Bezugsziffern bezeichnet. Wie in Figur 4 ist hier die Anordnung der Riemenspannvorrichtung 21 gegenüber dem Starter-Generator 31 und der Antriebsscheibe 12 erkennbar. Das Gehäuse 22 bildet eine Hülse 60 und geht in den Halteflansch 62 über und ist berührungsfrei gegenüber der Antriebsriemenscheibe und den stehenden Lagerungsmitteln der Antriebswelle 16 im Starter-Generator 31. Auf dem Hülsenteil 60 des ringförmigen Gehäuses 22 sind die Spannarme 23, 24 der beiden Spannrollen 25, 26 gelagert, und zwar der aus zwei Wangen und einer Hülse bestehende Spannarm 23 der Spannrolle 25 unmittelbar und der plattenförmige Spannarm 24 der Spannrolle 26 seinerseits auf dem Spannarm 23 der Spannrolle 25. An die Spannarme sind Lagerzapfen 38, 39 angesetzt, die mit Schrauben 40, 41 in den jeweiligen Spannarmen als stehende Zapfen angeschraubt sind. Auf diesen sind die Spannrollen 25, 26 drehbar gelagert. Die Spannvorrichtung kann bei montierter Antriebsriemenscheibe 12 mittels ihrer Befestigungsmittel am Starter-Generator montiert werden kann. Gleiches gilt für die Demontage bei am Starter-Generator montierter Antriebsscheibe, die in gleicher Weise möglich ist.

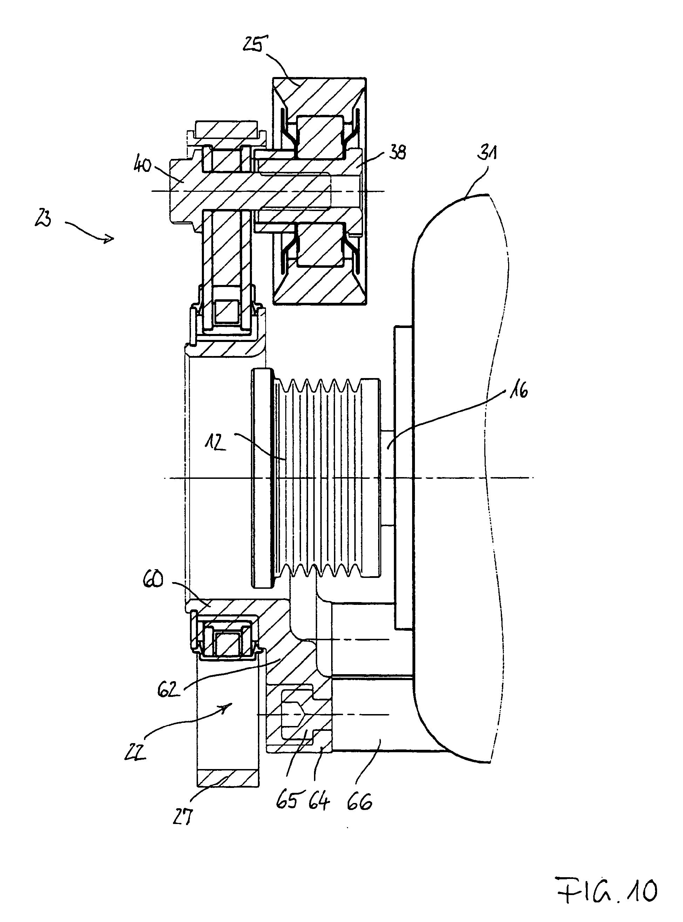

In Figur 10 sind gleiche Einzelheiten wie in den Figuren 8 und 9 mit gleichen Bezugsziffern versehen. Der dargestellte abgewinkelte Schnitt verläuft hierbei durch die Achse der Spannrolle 25 sowie durch einen von drei Befestigungszapfen 66 am Gehäuse des Starter-Generators, an dem das Gehäuse 22 der Riemenspannvorrichtung mittels des Halteflansches 62 angeschraubt ist.

### Bezugszeichenliste

- 11: Riementrieb
- 12: Antriebsscheibe
- 13: Riemenscheibe
- 14: Riemenscheibe
- 15: Riemen
- 16: Antriebswelle
- 17: Lagerungsmittel
- 18:
- 19:
- 20:
- 21: Riemenspannvorrichtung
- 22: Gehäuse
- 23: Spannarm
- 24: Spannarm
- 25: Spannrolle
- 26: Spannrolle
- 27: Druckfeder
- 28: Gegenarm
- 29: Befestigungsarm
- 30: Flanscherweiterung
- 31: Starter-Generator
- 32: Platte
- 33: Platte
- 34: Distanzstück
- 35: Distanzstück
- 36: Distanzstück
- 37:
- 38: Lagerzapfen
- 39: Lagerzapfen
- 40: Schraube
- 41: Schraube
- 42: Bundbuchse
- 43: Bundbuchse
- 44: Wange
- 45: Wange
- 46: Bundbuchse
- 47: Bundbuchse
- 48: Wange
- 49: Wange
- 50: Schraube
- 51: Schraube
- 52: Platte
- 53: Abstütznase
- 54: Gleitbuchse
- 55: Wange
- 56: Wange
- 57: Wange
- 58: Wange
- 59: Gleitbuchse
- 60: Hülse
- 61:
- 62: Halteflansch
- 63: Befestigungszapfen
- 64: Flanschauge
- 65: Befestigungsschraube
- 66: Befestigungszapfen

## Patentansprüche

1. Riemenspannvorrichtung (21) für einen Riementrieb (11), der eine Antriebsmaschine (31) mit einer Antriebsriemenscheibe (12), die von einer Antriebswelle (16) um eine Antriebsachse antreibbar ist, und mehrere weitere Riemenscheiben (13, 14) aufweist, und mit einem endlosen Riemen (15), der die Antriebsriemenscheibe (12) und die weiteren Riemenscheiben (13, 14) umschlingt, wobei die Riemenspannvorrichtung (21) ein Gehäuse (22) aufweist, in dem zwei Spannarme (23, 24) um eine gemeinsame Schwenkachse schwenkbar gelagert sind, in denen jeweils Spannrollen (25, 26) mit zur Antriebsachse parallelen Drehachsen gelagert sind, wobei die Spannarme (23, 24) mit Federmitteln (27) gegeneinander abgestützt sind,
wobei das Gehäuse (22) bei an der Antriebsmaschine (31) montierter Antriebsriemenscheibe (12) dadurch montierbar ist, daß das Gehäuse (22) in einem die Antriebwelle (16) der Antriebsriemenscheibe (12) umgebenden Ringbereich berührungsfrei gegenüber der Antriebsmaschine (31) ist,
**dadurch gekennzeichnet,**
**daß** die Schwenkachse der Spannarme (23, 24) innerhalb des Durchmessers der Antriebsriemenscheibe (12) angeordnet ist.

2. Riemenspannvorrichtung nach Anspruch 1,
**dadurch gekennzeichnet,**
**daß** die Schwenkachse der Spannarme (23, 24) koaxial zur Antriebsachse der Antriebsriemenscheibe (12) angeordnet ist.

3. Riemenspannvorrichtung nach einem der Ansprüche 1 oder 2,
**dadurch gekennzeichnet,**
**daß** Anschraubmittel am Gehäuse (22) vorgesehen sind, die in axialer Ansicht auf die Antriebsriemenscheibe (12) außerhalb des Durchmesser der Antriebsriemenscheibe (12) liegen.

4. Riemenspannvorrichtung nach Anspruch 3,
**dadurch gekennzeichnet,**
**daß** Anschraubmittel am Gehäuse (22) sich in axialer Ansicht auf die Antriebsriemenscheibe (12) über einen Kreisabschnitt von 30° bis 270°, insbesondere 45° bis 180°, erstrecken.

5. Riemenspannvorrichtung nach einem der Ansprüche 3 bis 4,
**dadurch gekennzeichnet,**
**daß** innerhalb der Anschraubmittel eine umlaufender freier Ringspalt zwischen Gehäuse (22) einerseits und Antriebsmaschine (31) und Antriebsriemenscheibe (12) andererseits gebildet wird.

6. Riemenspannvorrichtung nach einem der Ansprüche 1 bis 5,
**dadurch gekennzeichnet,**
**daß** das Gehäuse (22) an einem Maschinenteil anschraubbar ist, an dem die Antriebsmaschine (31) ebenfalls befestigt ist.

7. Riemenspannvorrichtung nach einem der Ansprüche 1 bis 5,
**dadurch gekennzeichnet,**
**daß** das Gehäuse (22) unmittelbar an der Antriebsmaschine (31) anschraubbar ist.

8. Riemenspannvorrichtung nach einem der Ansprüche 1 bis 7,
**dadurch gekennzeichnet,**
**daß** das Gehäuse (22) aus zwei Platten (32, 33) zusammengesetzt ist, zwischen denen die beiden Spannarme (23, 24) gehalten sind.

9. Riemenspannvorrichtung nach einem der Ansprüche 1 bis 7,
**dadurch gekennzeichnet,**
**daß** das Gehäuse (22) die Form einer Platte (52) mit einer Kreisöffnung hat, die von den beiden Spannarmen (23, 24) von innen umfaßt wird.

10. Riemenspannvorrichtung nach einem der Ansprüche 1 bis 7,
**dadurch gekennzeichnet,**
**daß** das Gehäuse (22) die Form einer Hülse (60) hat, auf der die beiden Spannarme (23, 24) gelagert sind.

11. Riemenspannvorrichtung nach einem der Ansprüche 9 oder 10,
**dadurch gekennzeichnet,**
**daß** ein erster Spannarm (23) im oder auf dem Gehäuse (22) und ein zweiter Spannarm (24) im oder auf dem ersten Spannarm (23) gelagert ist.

12. Riemenspannvorrichtung nach einem der Ansprüche 9 bis 11,
**dadurch gekennzeichnet,**
**daß** die Spannrollen (25, 26) jeweils zwischen zwei Wangen der Spannarme (23, 24) gehalten sind.

13. Riemenspannvorrichtung nach einem der Ansprüche 11 oder 12,
**dadurch gekennzeichnet,**
**daß** die Spannrollen (25, 26) jeweils einseitig fliegend an den Spannarmen (23, 24) gehalten sind.

14. Riementrieb (11), der eine Antriebsmaschine (31), mit einer Antriebsriemenscheibe (12), die um eine Antriebsachse antreibbar ist, und mehrere weitere Riemenscheiben (13, 14) aufweiset, und mit einem endlosen Riemen (15), der die Antriebsriemenscheibe (12) und die weiteren Riemenscheiben (13, 14) umschlingt, mit einer Riemenspannvorrichtung (21) nach einem der Ansprüche 1 bis 13.

## Claims

1. A belt tensioning device (21) for a belt drive (11) which comprises a driving machine (31) with a driving belt pulley (12) drivable by a driveshaft (16) around a driving axis, and a plurality of further belt pulleys (13, 14), and with an infinite belt (15) which is wrapped around the driving belt pulley (12) and the further belt pulleys (13, 14), wherein the belt tensioning device (21) comprises a housing (22) in which two tensioning arms (23, 24) are supported so as to be pivotable around a common pivot axis, in which tensioning arms (23, 24) there are supported tensioning rollers (25, 26) with axes of rotation extending parallel to the driving axis, wherein the tensioning arms (23, 24) are supported relative to one another by spring means (27),
wherein the housing (22) can be mounted, in presence of the driving belt pulley (12) being mounted at the driving machine (31), in that the housing (22) is contact-free relative to the driving machine (31) in an annular region surrounding the driveshaft (16) of the driving belt pulley (12),
**characterised in**
**that** the pivot axis of the tensioning arms (23, 24) is arranged inside the diameter of the driving belt pulley (12).

2. A belt tensioning device according to claim 1,
**characterised in**
**that** the pivot axis of the tensioning arms (23, 24) is arranged coaxially relative to the driving axis of the driving belt pulley (12).

3. A belt tensioning device according to any one of claims 1 or 2,
**characterised in**
**that**, at the housing (22), there are provided bolting means which, in an axial view of the driving belt pulley (12), are positioned outside the diameter of the driving belt pulley (12).

4. A belt tensioning device according to claim 3,
**characterised in**
**that**, in an axial view of the driving belt pulley (12), the bolting means at the housing (22) extend over a partial circle of 30° to 270°, more particularly 45° to 180°.

5. A belt tensioning device according to any one of claims 3 to 4,
**characterised in**
**that**, inside the bolting means, there is formed a continuous free annular gap between the housing (22) on the one hand and the driving machine (31) and the driving belt pulley (12) on the other hand.

6. A belt tensioning device according to any one of claims 1 to 5,
**characterised in**
**that** the housing (22) can be bolted to a machine part to which the driving machine (31) is also fixed.

7. A belt tensioning device according to any one of claims 1 to 5,
**characterised in**
**that** the housing (22) can be bolted directly to the driving machine (31).

8. A belt tensioning device according to any one of claims 1 to 7,
**characterised in**
**that** the housing (22) is composed of two plates (32, 33) between which the two tensioning arms (23, 24) are held.

9. A belt tensioning device according to any one of claims 1 to 7,
**characterised in**
**that** the housing (22) has the shape of a plate (52) with a circular aperture which is embraced from the inside by the two tensioning arms (23, 24).

10. A belt tensioning device according to any one of claims 1 to 7,
**characterised in**
**that** the housing (22) has the shape of a sleeve (60) on which there are supported the two tensioning arms (23, 24).

11. A belt tensioning device according to any one of claims 9 or 10,
**characterised in**
**that** a first tensioning arm (23) is supported in or on the housing (22) and that a second tensioning arm (24) is supported in or on the first tensioning arm (23).

12. A belt tensioning device according to any one of claims 9 to 11,
**characterised in**
**that** the tensioning rollers (25, 26) are each held between two cheeks of the tensioning arms (23, 24).

13. A belt tensioning device according to any one of claims 11 or 12,
**characterised in**
**that** the tensioning rollers (25, 26) are held at the tensioning arms (23, 24) so as to be overhung on one side.

14. A belt drive (11) which comprises a driving machine (31) with a driving belt pulley (12) drivable around a driving axis, and a plurality of further driving pulleys (13, 14), and having an infinite belt (15) which is wrapped around the driving belt pulley (12) and the further belt pulleys (13, 14), with a belt tensioning device (21) according to any one of claims 1 to 13.

## Revendications

1. Tendeur de courroie (21) pour un entraînement par courroie (11), qui comporte un moteur d'entraînement (31) avec une poulie de commande (12), qui est propre à être entraînée par un arbre d'entraînement (16) autour d'un axe d'entraînement, et plusieurs autres poulies (13, 14), et avec une courroie (15) sans fin, qui défile sur la poulie de commande (12) et les autres poulies (13, 14), ledit tendeur de courroie (21) comportant un boîtier (22), dans lequel deux bras tendeurs (23, 24) sont montés pivotant autour d'un axe de pivotement commun, dans lesquels sont montés respectivement des galets tendeurs (25, 26) avec des axes de rotation parallèles à l'axe d'entraînement, les bras tendeurs (23, 24) prenant appui l'un contre l'autre par des moyens à ressort (27),
le boîtier (22) peut être monté en présence de la poulie de commande (12) montée sur le moteur d'entraînement (31), par le fait que le boîtier (22) est sans contact avec le moteur d'entraînement (31) dans une zone annulaire entourant l'arbre d'entraînement (16) de la poulie de commande (12),
**caractérisé en ce que**
l'axe de pivotement des bras tendeurs (23, 24) est situé à l'intérieur du diamètre de la poulie de commande (12).

2. Tendeur de courroie selon la revendication 1, **caractérisé en ce que** l'axe de pivotement des bras tendeurs (23, 24) est disposé coaxialement à l'axe d'entraînement de la poulie de commande (12).

3. Tendeur de courroie selon la revendication 1 ou 2, **caractérisé en ce que** des moyens de vissage sont prévus sur le boîtier (22), lesquels, sur une vue axiale sur la poulie de commande (12), sont situés à l'extérieur du diamètre de la poulie de commande (12).

4. Tendeur de courroie selon la revendication 3, **caractérisé en ce que** les moyens de vissage sur le boîtier (22) s'étendent, sur une vue axiale sur la poulie de commande (12), sur un segment de cercle de 30° à 270°, en particulier de 45° à 180°.

5. Tendeur de courroie selon l'une quelconque des revendications 3 à 4, **caractérisé en ce qu'**à l'intérieur des moyens de vissage est formée une fente annulaire périphérique libre entre le boîtier (22), d'une part, et le moteur d'entraînement (31) et la poulie de commande (12), d'autre part.

6. Tendeur de courroie selon l'une quelconque des revendications 1 à 5, **caractérisé en ce que** le boîtier (22) peut être vissé contre une partie de machine, à laquelle est également fixé le moteur d'entraînement (31).

7. Tendeur de courroie selon l'une quelconque des revendications 1 à 5, **caractérisé en ce que** le boîtier (22) peut être vissé directement sur le moteur d'entraînement (31).

8. Tendeur de courroie selon l'une quelconque des revendications 1 à 7, **caractérisé en ce que** le boîtier (22) est formé par deux plaques (32, 33), entre lesquelles sont maintenus les deux bras tendeurs (23, 24).

9. Tendeur de courroie selon l'une quelconque des revendications 1 à 7, **caractérisé en ce que** le boîtier (22) a la forme d'une plaque (52) avec une ouverture circulaire, qui est entourée de l'intérieur par les deux bras tendeurs (23, 24).

10. Tendeur de courroie selon l'une quelconque des revendications 1 à 7, **caractérisé en ce que** le boîtier (22) a la forme d'un manchon (60), sur lequel sont montés les deux bras tendeurs (23, 24).

11. Tendeur de courroie selon la revendication 9 ou 10, **caractérisé en ce qu'**un premier bras tendeur (23) est monté dans ou sur le boîtier (22), et un deuxième bras tendeur (24) est monté dans ou sur le premier bras tendeur (23).

12. Tendeur de courroie selon l'une quelconque des revendications 9 à 11, **caractérisé en ce que** les galets tendeurs (25, 26) sont maintenus respectivement entre deux joues des bras tendeurs (23, 24).

13. Tendeur de courroie selon la revendication 11 ou 12, **caractérisé en ce que** les galets tendeurs (25, 26) sont maintenus chacun unilatéralement de manière mobile sur les bras tendeurs (23, 24).

14. Entraînement par courroie (11), qui comporte un moteur d'entraînement (31), avec une poulie de commande (12) qui est propre à être entraînée autour d'un axe d'entraînement, et plusieurs autres poulies (13, 14), et avec une courroie (15) sans fin, qui défile sur la poulie de commande (12) et les autres poulies (13, 14), avec un tendeur de courroie (21) selon l'une des revendications 1 à 13.
